(19) **Europäisches Patentamt**

**European Patent Office**

**Office européen des brevets**

(11) **EP 0 977 098 B1**

(12) **FASCICULE DE BREVET EUROPEEN**

(45) Date de publication et mention
de la délivrance du brevet:
**23.04.2003 Bulletin 2003/17**

(51) Int Cl.⁷: **G05B 9/03**, G05B 23/02

(21) Numéro de dépôt: **98870165.2**

(22) Date de dépôt: **29.07.1998**

(54) **Système redondant de contrôle de procédé**

Redundantes Prozesssteuerungssystem

Redundant process control system

(84) Etats contractants désignés:
**AT BE CH DE ES FR GB IT LI SE**

(43) Date de publication de la demande:
**02.02.2000 Bulletin 2000/05**

(73) Titulaire: **Cegelec Acec S.A.**
**6000 Charleroi (BE)**

(72) Inventeur: **Claes, Joseph**
**6120 Ham Sur Heure (FR)**

(74) Mandataire: **Renaud-Goud, Thierry**
**Renaud-Goud Conseil,**
**5, rue de Montigny**
**13100 Aix-en-Provence (FR)**

(56) Documents cités:
**EP-A- 0 057 453        EP-A- 0 202 052**
**EP-A- 0 211 500        EP-A- 0 307 191**
**EP-A- 0 697 637        WO-A-97/49020**
**US-A- 4 692 299**

## Description

La présente invention concerne un système redondant de contrôle de procédé comprenant une unité de commande assurant une fonction de commande ; on prévoit cependant souvent d'utiliser une pluralité d'unités de commande identiques pour assurer cette fonction.

Le document EP 0 697 637 enseigne un système de régulation comportant une telle unité de commande. Il n'est toutefois pas prévu de dupliquer cette unité de commande.

Le domaine de l'invention est donc celui des applications dites sécuritaires dans lesquelles la sécurité joue un rôle primordial, justifiant par là même une duplication des unités de commande pour combattre une erreur aléatoire sur l'une de ces unités. Les procédés concernés sont les plus divers et souvent de nature industrielle. On citera à titre d'exemple, le contrôle des centrales nucléaires, la signalisation ferroviaire ou la régulation des réacteurs chimiques.

Ainsi, maintenant, les systèmes sécuritaires comprennent souvent au moins trois automates programmables qualifiés. Ces automates comportent essentiellement un processeur et une mémoire de travail dans laquelle est enregistré un programme de mise en oeuvre du procédé, ce programme devant être exécuté par le processeur. Ils sont qualifiés, c'est-à-dire que, d'une part, le processeur est soumis à des tests extrêmement sévères et, d'autre part, le programme répond à des normes très contraignantes de développement, comme par exemple la norme CEI 880 dans le cas des applications nucléaires.

Les trois automates sont identiques, notamment au niveau du processeur et du programme, et ils produisent chacun un signal de sortie.

Par ailleurs, le système comprend fréquemment un organe de sécurisation qui produit un signal de contrôle résultant d'un vote majoritaire sur des signaux de réglage dérivés des signaux de sortie des processeurs. En d'autres termes, le signal de contrôle prend la valeur de la majorité des signaux de réglage. On s'affranchit de la sorte d'une erreur aléatoire sur l'un des automates dès lors que les deux autres produisent des signaux de sortie identiques.

A titre d'exemple, le document EP 0 307 191 décrit un système multiplexé de contrôle de procédé pourvu d'une fonction de diagnostique. Ce système comprend une pluralité d'unités de commande identiques, un organe de sécurisation pour produire une décision majoritaire sur les signaux de sortie de ces unités de commande et un organe de diagnostique pour vérifier le bon fonctionnement de l'organe de sécurisation.

Il apparaît cependant que la complexité des composants à très large intégration tels que les processeurs des automates ne permet pas de réaliser un test d'une fiabilité absolue en fin de fabrication. On constate à l'usage des défauts de conception ou de fabrication qui n'ont pas été décelés lors du test. De tels défauts ont une forte probabilité d'apparaître, par exemple, dans plusieurs composants d'un même lot de fabrication, et donc, les processeurs du système sécuritaire peuvent être amenés à produire tous trois un signal de sortie erroné, réduisant ainsi à néant l'efficacité de l'organe de sécurisation. Ce type de défauts est généralement référencé en tant que cause commune de défaillance.

De même, un défaut non détecté dans le développement du programme produira des conséquences équivalentes dans le système sécuritaire. En effet, le principe même de la sévérité de la qualification du programme a bien pour but de réduire au maximum le nombre de défauts mais ce principe impose une limitation du programme à un procédé identifié. Il s'ensuit que ce programme ne faisant pas l'objet d'une large utilisation, les défauts cachés ont d'autant moins de chances d'apparaître rapidement à l'usage pour être corrigés par ce que l'on appelle le retour d'expérience.

La présente invention a ainsi pour objet de lutter contre les causes communes de défaillance dans un système sécuritaire de contrôle de procédé.

Selon l'invention, un système redondant de contrôle de procédé comprend au moins une unité de commande, cette unité de commande produisant un signal de sortie résultant de l'application d'une fonction de commande à un ensemble de signaux d'entrée, et il comporte au moins un organe de test différent de cette unité de commande, cet organe de test produisant un signal de test résultant de l'application de la fonction de commande à l'ensemble de signaux d'entrée et générant une alarme en cas de différence entre le signal de test et le signal de sortie.

De préférence, le système comprend une pluralité d'unités de commande identiques, chaque unité de commande produisant un signal de sortie respectif résultant de l'application de la fonction de commande à un ensemble respectif de signaux d'entrée.

L'organe de test étant différent des unités de commande, il est fort peu probable qu'il soit affecté d'une cause commune de défaillance de ces unités, et l'alarme ainsi générée permet d'identifier un tel défaut.

A titre optionnel, le système comprend de plus un organe de sécurisation pour produire un signal de contrôle notamment en cas de différence entre des signaux de réglage dérivés des signaux de sortie.

Selon un mode de réalisation avantageux, le signal de contrôle correspond à un vote majoritaire sur les signaux de réglage.

A titre d'exemple, les unités de commande et l'organe de test comportant chacun un processeur associé à une mémoire de travail dans laquelle est enregistré un programme de mise en oeuvre du procédé, le programme ou le processeur de l'organe de test est différent de celui des unités de commande.

De préférence, l'organe de test produit le signal de test au moment où les unités de commande produisent les signaux de sortie correspondants.

Pour augmenter encore la sécurité, on peut prévoir que le système comporte une pluralité correspondante d'organes de test recevant chacun un signal de sortie distinct et qu'il comprenne de plus un organe de supervision pour produire un signal d'alerte résultant d'un vote majoritaire sur les alarmes générées par ces organes de test.

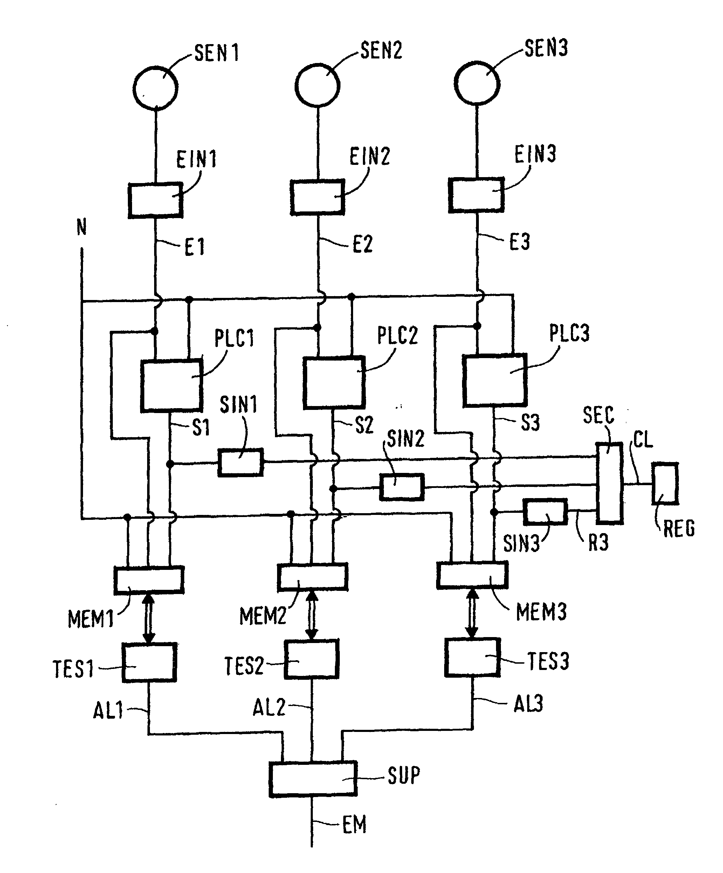

La présente invention apparaîtra maintenant avec plus de détails dans le cadre de la description qui suit d'exemples de réalisation donnés à titre illustratif en se référant à la figure unique annexée qui représente les principaux éléments nécessaires à la mise en oeuvre d'un système sécuritaire.

En référence à la figure, classiquement, une installation comporte trois capteurs SEN1, SEN2, SEN3 pour mesurer un même paramètre du procédé qu'il s'agit de contrôler. Ces capteurs qui produisent chacun un signal analogique sont suivis par des interfaces d'entrée respectives EIN1, EIN2, EIN3 pour convertir les signaux analogiques en signaux numériques.

Le système comprend un premier PLC1, un deuxième PLC2 et un troisième PLC3 automates programmables identiques recevant respectivement un premier, un deuxième et un troisième signal d'entrée en provenance des interfaces d'entrée respectives EIN1, EIN2, EIN3. Ces automates produisent respectivement un premier S1, un deuxième S2 et un troisième S3 signal de sortie. On prévoit de plus une première SIN1, une deuxième SIN2, et une troisième SIN3 interfaces de sortie qui reçoivent respectivement le premier S1, le deuxième S2 et le troisième S3 signal de sortie pour produire respectivement un premier R1, un deuxième R2 et un troisième R3 signal de réglage. Les trois automates sont en outre raccordés à un réseau N qui assure les échanges de données entre les différents éléments du système.

Les trois signaux d'entrée proviennent donc ici de trois capteurs distincts. En pratiquant ainsi une diversité de capteurs, on augmente encore la fiabilité du système. Cependant, l'invention s'applique également si un seul capteur est utilisé, c'est-à-dire si les trois signaux d'entrée se confondent en un signal unique.

D'autre part, une fonction de commande identifiée du procédé peut requérir plusieurs paramètres pour la production d'un signal de sortie déterminé.

Ainsi, les automates PLC1, PLC2, PLC3 reçoivent chacun un ensemble de signaux d'entrée E1, E2, E3, chaque ensemble comprenant un ou plusieurs signaux correspondant chacun à un paramètre unique de procédé.

Les automates sont identiques et comprennent donc le même processeur destiné à exécuter un même programme dans lequel figure cette fonction de commande. Le programme est enregistré dans ce qu'il est convenu d'appeler une mémoire de travail. Les différents composants de l'automate ne sont pas représentés dans la figure car il s'agit là de l'état de l'art.

Le système comprend par ailleurs souvent un organe de sécurisation SEC qui procède à un vote majoritaire sur les trois signaux de réglage R1, R2, R3. Lorsque ces signaux de réglage sont binaires, le signal de contrôle CL produit par cet organe prend la valeur des deux signaux au moins qui sont identiques.

A titre d'exemple, en notant "*" l'opérateur logique "ET" et "+" l'opérateur logique "OU", une fonction logique qui permet d'obtenir ce signal de contrôle CL prend la forme suivante :

$$CL = R1*R2 + R2*R3 + R3*R1$$

On précisera par ailleurs que si les signaux de réglage sont analogiques le signal de contrôle peut alors être représenté par l'expression suivante :

$$CL = Max[Min(R1, R2), Min(R2, R3), Min(R3, R1)]$$

Le signal de contrôle CL est appliqué à un organe de réglage REG lui-même chargé de commander un actionneur d'après la fonction de commande.

Selon l'invention, le système comprend de plus un premier organe de test TES1 qui accède au réseau N, au premier ensemble de signaux d'entrée E1 et au premier signal de sortie S1 par l'intermédiaire d'une première mémoire biaccès MEM1.

Ainsi, l'organe de test est connecté sur les accès numériques directs de l'automate et non pas, comme c'est généralement le cas, sur les accès capteurs ou actionneurs. Cet organe dispose donc des signaux traités par l'automate indépendamment de toute interface d'entrée ou de sortie.

Cet organe de test TES1 comprend un processeur qui est de préférence différent de celui des trois automates. Avantageusement, ce processeur est un composant industriel de grande diffusion, contrairement aux processeurs qualifiés des automates.

Le processeur de l'organe de test produit un premier signal de test par application de la fonction de commande au premier ensemble de signaux d'entrée E1, ceci au moyen d'un programme qui est de préférence distinct de celui mis en oeuvre dans les trois automates. Avantageusement, le programme implémenté dans l'organe de test est développé selon une méthodologie industrielle qui n'est pas soumise à des normes contraignantes, si bien qu'il est peu coûteux.

L'invention propose donc une diversité d'équipements pour réaliser une même fonction de commande, à savoir d'une part le premier automate PLC1 et d'autre part le premier organe de test TES1. La diversité maximale est obtenue lorsque le processeur et le programme de ces deux équipements sont différents mais l'invention s'applique également si soit les processeurs, soit les programmes, sont différents.

Cet organe de test TES1, après avoir produit le premier signal de test, compare ce signal avec le premier signal de sortie S1. Si ces deux signaux sont différents, il génère une première alarme AL1. Dans le cas d'un procédé industriel, cette alarme pourra être transmise à la salle de conduite de l'installation, ce qui aura pour effet d'alerter le personnel en charge de cette installation.

De préférence, l'organe de test est au moins aussi rapide que les automates, de sorte que l'alarme éventuelle soit générée pratiquement au moment de l'apparition du premier signal de sortie S1. Ainsi, la première alarme AL1 est produite dans les meilleurs délais.

Lors des tests en usine ou lors de la mise en service du système, il peut se produire des alarmes intempestives suite à des divergences anormales entre le signal de test et le premier signal de sortie. En effet, la fonction de commande, un algorithme de filtrage par exemple, peut différer quelque peu entre le programme de l'organe de test et celui de l'automate. Il convient dans ce cas d'apporter les modifications requises dans l'organe de test de sorte qu'une alarme ne soit pas produite à tort.

Il apparaît que l'analyse des situations conduisant à la génération d'une alarme, au fil du temps, dans les conditions réelles d'exploitation, permet de mettre en évidence d'éventuels défauts de fonctionnement tant dans l'automate que dans l'organe de test. Les corrections apportées à l'organe de test pour remédier à ces défauts en cas de fausse alarme conduisent à qualifier progressivement cet organe vis-à-vis du procédé en cause.

Lorsque les divergences entre l'organe de test et l'automate sont déclarées exceptionnelles suite aux différentes corrections apportées, l'alarme générée par l'organe de test peut être introduite dans une chaîne de sécurité de la conduite de l'installation. On pourra même prévoir que cette alarme soit à l'origine d'un arrêt d'urgence s'il faut privilégier la sécurité par rapport à la disponibilité de cette installation.

L'invention prévoit également de dupliquer les organes de test, au même titre que les automates.

Ainsi, avantageusement, un deuxième organe de test TES2, analogue au premier TES1, accède au réseau N, au deuxième ensemble de signaux d'entrée E2 et au deuxième signal de sortie S2 par l'intermédiaire d'une deuxième mémoire biaccès MEM2 pour produire un deuxième signal de test par application de la fonction de commande à ce deuxième ensemble de signaux d'entrée E2. Le deuxième organe de test TES2 génère une deuxième alarme AL2 en cas de différence entre le deuxième signal de test et le deuxième signal de sortie S2.

De même, un troisième organe de test TES3, analogue au premier TES1, accède au réseau N, au troisième ensemble de signaux d'entrée E3 et au troisième signal de sortie S3 par l'intermédiaire d'une troisième mémoire biaccès MEM3 pour produire un troisième signal de test par application de la fonction de commande à ce troisième ensemble de signaux d'entrée E3. Le troisième organe de test TES3 génère une troisième alarme AL3 en cas de différence entre le troisième signal de test et le troisième signal de sortie S3.

Les trois organes de test peuvent être différents tant sur le plan matériel que logiciel.

Le système comprend de plus un organe de supervision SUP qui produit un signal d'alerte EM par vote majoritaire sur les alarmes AL1, AL2, AL3 issues des trois organes de test TES1, TES2, TES3, c'est-à-dire si deux au moins des trois alarmes sont présentes dans l'exemple adopté.

Naturellement, le signal d'alerte EM joue un rôle équivalent à celui de la première alarme AL1 dans le cas où le système comporte un seul organe de test, à savoir le premier TES1. Ainsi les remarques faites à propos de cette première alarme AL1 s'appliquent également au signal d'alerte EM.

Jusqu'à présent, on a considéré que le système sécuritaire comportait trois automates programmables. L'invention s'applique également pour un nombre supérieur d'automates.

On peut toutefois envisager l'application de l'invention lorsque seulement deux automates sont prévus dans le système. Dans ce cas, l'organe de sécurisation ne pourra pas réaliser un vote majoritaire et il se contentera d'identifier une disparité entre les signaux de sortie des deux automates au moyen du signal de contrôle CL. Ce signal de contrôle sera alors exploité par le système comme une alarme classique.

On peut même envisager l'emploi d'un seul automate, auquel cas il n'y a plus d'organe de sécurisation.

On précisera par ailleurs que les signaux de sortie des différents automates peuvent être binaires. Si tel n'est pas le cas, l'organe de test correspondant sera ainsi prévu qu'il produise une alarme si le signal de test et le signal de sortie concernés présentent un écart excédant un seuil prédéterminé.

Il vient que l'invention s'applique à tout type d'unités de commande dont la tâche est de réaliser le contrôle d'un procédé. C'est ainsi le cas des automates programmables et, plus généralement, des composants programmables connus sous le nom de contrôleur.

## Revendications

1. Système redondant de contrôle de procédé comprenant au moins une unité de commande (PLC1), cette unité de commande produisant un signal de sortie (S1) résultant de l'application d'une fonction de commande à un ensemble de signaux d'entrée (E1), **caractérisé en ce qu'**il comporte au moins un organe de test (TES1) différent de ladite unité de commande, cet organe de test produisant un signal de test résultant de l'application de ladite fonction de commande audit ensemble de signaux d'entrée (E1) et générant une alarme (AL1) en cas de différence entre ledit signal de test et ledit signal de sortie (S1).

2. Système selon la revendication 1, **caractérisé en ce qu'**il comprend une pluralité d'unités de commande (PLC1, PLC2, PLC3) identiques, chaque unité de commande produisant un signal de sortie respectif (S1, S2, S3) résultant de l'application de ladite fonction de commande à un ensemble respectif de signaux d'entrée (E1, E2, E3).

3. Système selon la revendication 2, **caractérisé en ce qu'**il comprend de plus un organe de sécurisation (SEC) pour produire un signal de contrôle (CL) notamment en cas de différence entre des signaux de réglage (R1, R2, R3) dérivés desdits signaux de sortie (S1, S2, S3).

4. Système selon la revendication 3, **caractérisé en ce que** ledit signal de contrôle (CL) correspond à un vote majoritaire sur lesdits signaux de réglage (R1, R2, R3).

5. Système selon l'une quelconque des revendications précédentes **caractérisé en ce que**, lesdites unités de commande (PLC1, PLC2, PLC3) et ledit organe de test (TES1) comportant chacun un processeur associé à une mémoire de travail dans laquelle est enregistré un programme de mise en oeuvre du procédé, le programme dudit organe de test est différent de celui desdites unités de commande.

6. Système selon l'une quelconque des revendications précédentes **caractérisé en ce que**, lesdites unités de commande (PLC1, PLC2, PLC3) et ledit organe de test (TES1) comportant chacun un processeur associé à une mémoire de travail dans laquelle est enregistré un programme de mise en oeuvre du procédé, le processeur dudit organe de test est différent de celui desdites unités de commande.

7. Système selon l'une quelconque des revendications précédentes, **caractérisé en ce que** ledit organe de test (TES1) produit ledit signal de test au moment où lesdites unités de commande (PLC1, PLC2, PLC3) produisent les signaux de sortie correspondants (S1, S2, S3).

8. Système selon l'une quelconque des revendications 2 à 7 **caractérisé en ce que**, comportant une pluralité correspondante d'organes de test (TES1, TES2, TES3) recevant chacun un signal de sortie distinct (S1, S2, S3), il comprend de plus un organe de supervision (SUP) pour produire un signal d'alerte (EM) résultant d'un vote majoritaire sur les alarmes (AL1, AL2, AL3) générées par lesdits organes de test.

**Patentansprüche**

1. Redundantes System zur Steuerung eines Verfahrens mit mindestens einer Steuereinheit (PLC1), die ein Ausgangssignal (S1) erzeugt, das aus der Anwendung einer Steuerfunktion auf eine Gruppe von Eingangssignalen (E1) resultiert, **dadurch gekennzeichnet, daß** es mindestens ein Testorgan (TES1) enthält, das sich von der Steuereinheit unterscheidet und ein Testsignal erzeugt, das aus der Anwendung der Steuerfunktion auf die Gruppe von Eingangssignalen (E1) resultiert und das eine Alarmmeldung (AL1) erzeugt, wenn das Testsignal und das Ausgangssignal (S1) sich voneinander unterscheiden.

2. System nach Anspruch 1, **dadurch gekennzeichnet, daß** es mehrere gleichartige Steuereinheiten (PLC1, PLC2, PLC3) aufweist, die je ein eigenes Ausgangssignal (S1, S2, S3) durch Anwendung der Steuerfunktion auf die jeweilige Gruppe von Eingangssignalen (E1, E2, E3) erzeugen.

3. System nach Anspruch 2, **dadurch gekennzeichnet, daß** es außerdem ein Sicherungsorgan (SEC) enthält, um ein Kontrollsignal (CL) insbesondere im Fall einer Abweichung zwischen Regelsignalen (R1, R2, R3) zu erzeugen, die von den Ausgangssignalen (S1, S2, S3) abgeleitet sind.

4. System nach Anspruch 3, **dadurch gekennzeichnet, daß** das Steuersignal (CL) einem Mehrheitsvotum bezüglich der Regelsignale (R1, R2, R3) entspricht.

5. System nach einem beliebigen der vorstehenden Ansprüche, **dadurch gekennzeichnet, daß**, wenn die Steuereinheiten (PLC1, PLC2, PLC3) und das Testorgan (TES1) je einen Prozessor und einen zugeordneten Arbeitsspeicher aufweisen, in dem ein Programm zur Durchführung des Verfahrens gespeichert ist, das Programm des Testorgans sich von dem der Steuereinheiten unterscheidet.

6. System nach einem beliebigen der vorstehenden Ansprüche, **dadurch gekennzeichnet, daß**, wenn die Steuereinheiten (PLC1, PLC2, PLC3) und das Testorgan (TES1) je einen Prozessor und einen zugeordneten Arbeitsspeicher aufweisen, in dem ein Programm zur Durchführung des Verfahrens gespeichert ist, der Prozessor des Testorgans sich von dem der Steuereinheiten unterscheidet.

7. System nach einem beliebigen der vorstehenden Ansprüche, **dadurch gekennzeichnet, daß** das Testorgan (TES1) das Testsignal in dem Augenblick erzeugt, in dem die Steuereinheiten (PLC1, PLC2, PLC3) ihr jeweiliges Ausgangssignal (S1, S2, S3) erzeugen

8.  System nach einem beliebigen der Ansprüche 2 bis 7, **dadurch gekennzeichnet, daß** das System, wenn es mehrere entsprechende Testorgane (TES1, TES2, TES3) enthält, die je ein eigenes Ausgangssignal (S1, S2, S3) empfangen, außerdem ein Überwachungsorgan (SUP) enthält, das ein Alarmsignal (EM) auslöst, das aus einem Mehrheitsvotum bezüglich der von den Testorganen erzeugten Alarmmeldungen resultiert.

**Claims**

1.  A redundant process control system including at least one control unit (PLC1) which produces an output signal (S1) resulting from a control function being applied to a set of input signals (E1); said system being **characterized in that** it includes at least one test member (TES1) that is different from said control unit, which test member produces a test signal resulting from said control function being applied to said set of input signals (E1) and generates an alarm (AL1) whenever there is a difference between said test signal and said output signal (S1).

2.  A system according to claim 1, **characterized in that** it includes a plurality of identical control units (PLC1, PLC2, PLC3), each control unit producing a respective output signal (S1, S2, S3) resulting from said control function being applied to a respective set of input signals (E1, E2, E3).

3.  A system according to claim 2, **characterized in that** it further includes a security member (SEC) for producing a control signal (CL), in particular whenever there is a difference between the adjustment signals (R1, R2, R3) derived from said output signals (S1 S2, S3).

4.  A system according to claim 3, **characterized in that** said control signal (CL) corresponds to majority voting being applied to said adjustment signals (R1, R2, R3).

5.  A system according to any preceding claim **characterized in that**, each of said control units (PLC1, PLC2, PLC3) and said test member (TES1) including a processor associated with a working memory in which a program for performing the process is recorded, the program of said test member is different from the program in each of said control units.

6.  A system according to any preceding claim **charac-**

**terized in that**, each of said control units (PLC1, PLC2, PLC3) and said test member (TES1) including a processor associated with a working memory in which a program for performing the process is recorded, the processor of said test member is different from the processor of each of said control units.

7.  A system according to any preceding claim, **characterized in that** said test member (TES1) produces said test signal at the same time as said control units (PLC1, PLC2, PLC3) produce the corresponding output signals (S1, S2, S3).

8.  A system according to any one of claims 2 to 7 **characterized in that**, said system including a corresponding plurality of test members (TES1, TES2, TES3), each of which receives a distinct output signal (S1, S2, S3), said system further includes a supervision member (SUP) for producing a warning signal (EM) resulting from majority voting being applied to the alarms (AL1, AL2, AL3) generated by said test members.